# EUROPEAN PATENT APPLICATION

(11) **EP 4 438 564 A1**
(43) Date of publication of application: **02.10.2024**
(21) Application number: 24153861.0
(22) Date of filing: 25.01.2024
(51) Int. Cl.: C01G 53/00, H01M 4/505

(54) **METHOD FOR PRODUCING POSITIVE ELECTRODE ACTIVE MATERIAL**

(30) Priority: 30.03.2023 JP 2023055091
(71) Applicant: Prime Planet Energy & Solutions, Inc., Chuo-ku Tokyo 103-0022 (JP)
(72) Inventor: YAMAMOTO, Yuji, Tokyo, 103-0022 (JP); NONAKA, Shoji, Tokyo, 103-0022 (JP); TAKAMORI, Shunya, Tokyo, 103-0022 (JP)
(74) Representative: Kuhnen & Wacker Patent- und Rechtsanwaltsbüro PartG mbB

(57) **Abstract**

Provided is a method that enables production of a positive electrode active material having a high nickel content and capable of imparting high output to a lithium ion secondary battery without using an oxygen atmosphere. A method for producing a positive electrode active material disclosed here includes: performing a heat treatment on a hydroxide in which a ratio of a nickel content to a total content of all the metal elements is 60% by mole or more, in an air atmosphere to thereby obtain an oxide having primarily a spinel structure; mixing the oxide with a Li-containing compound to thereby obtain a mixture; and firing the mixture in an air atmosphere to thereby convert the mixture to a lithium composite oxide with a layered rock salt structure. In the oxide having primarily a spinel structure, a peak integrated intensity ratio of a (003) plane to a (440) plane is 1.5 or less, and a peak integrated intensity ratio of the (440) plane to a (311) plane is 4.5 or more, the peak integrated intensity ratios being obtained by a powder X-ray diffraction analysis using CuKα rays.

## Description

### TECHNICAL FIELD

The present disclosure relates to a method for producing a positive electrode active material.

### BACKGROUND

Recent lithium ion secondary batteries are suitably used for, for example, portable power supplies for devices such as personal computers and portable terminals, and power supplies for driving vehicles such as battery electric vehicles (BEVs), hybrid electric vehicles (HEVs), and plug-in hybrid electric vehicles (PHEVs).

For application as a vehicle driving power supply, there has been a demand for enhancing capacity of a lithium ion secondary battery from the viewpoint of increasing travel range. A typical positive electrode active material of a lithium ion secondary battery is a lithium composite oxide containing nickel, and it is known that the use of a lithium composite oxide with a high nickel content can increase capacity of a lithium ion secondary battery (see, for example, Patent Document 1).

In the case of producing a lithium composite oxide with a high nickel content, to suppress cation mixing of divalent nickel, a precursor of a lithium composite oxide (especially composite hydroxide) and a lithium source are generally fired in an oxygen atmosphere (i.e., atmosphere with an oxygen concentration higher than that in the air). Patent Document 1 proposes that in order to reduce an oxygen consumption amount from the viewpoint of reducing manufacturing costs, nickel cobalt manganese composite hydroxide and a lithium source are primarily temporarily fired in an oxygen atmosphere, and then the primarily temporarily fired product is finally fired in an air atmosphere.

### CITATION LIST

### PATENT DOCUMENT

Patent Document 1: Japanese Translation of PCT International Application Publication No. 2022-517078

### SUMMARY

The method proposed in Patent Document 1, however, still needs an oxygen atmosphere in primary temporary firing. Thus, there is still room for reducing manufacturing costs, and in addition, preparing an oxygen atmosphere causes decrease in productivity. Furthermore, excessive oxygen suppresses crystal growth of a lithium composite oxide, and thus, a higher firing temperature is needed. This also decreases productivity. For the foregoing reasons, it is desired to develop a method for producing a lithium composite oxide (i.e., positive electrode active material) with a higher nickel content without using an oxygen atmosphere. In addition, a lithium ion secondary battery is required to provide high output especially for application as a vehicle driving power supply.

Embodiments of the present disclosure provide a method that enables production of a positive electrode active material having a high nickel content and capable of imparting high output to a lithium ion secondary battery, without using an oxygen atmosphere.

A method for producing a positive electrode active material disclosed here includes: performing a heat treatment on a hydroxide in which a ratio of a nickel content to a total content of all the metal elements is 60% by mole or more, in an air atmosphere to thereby obtain an oxide having primarily a spinel structure; mixing the oxide with a Li-containing compound to thereby obtain a mixture; and firing the mixture in an air atmosphere to thereby convert the mixture to a lithium composite oxide with a layered rock salt structure. In the oxide having primarily a spinel structure, a peak integrated intensity ratio of a (003) plane to a (440) plane is 1.5 or less, and a peak integrated intensity ratio of the (440) plane to a (311) plane is 4.5 or more, the peak integrated intensity ratios being obtained by a powder X-ray diffraction analysis using CuKα rays.

This configuration enables production of a positive electrode active material having a high nickel content and capable of imparting high output to a lithium ion secondary battery without using an oxygen atmosphere.

### BRIEF DESCRIPTION OF THE DRAWINGS

FIG. 1 is a flowchart depicting each of steps of a method for producing a positive electrode active material according to one embodiment of the present disclosure.
FIG. 2 is a cross-sectional view schematically illustrating a configuration of a lithium ion secondary battery configured by using a positive electrode active material obtained by a production method according to one embodiment of the present disclosure.
FIG. 3 is a schematic disassembled view illustrating a configuration of a wound electrode body in FIG. 2.

### DETAILED DESCRIPTION

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

A "secondary battery" herein refers to an electricity storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

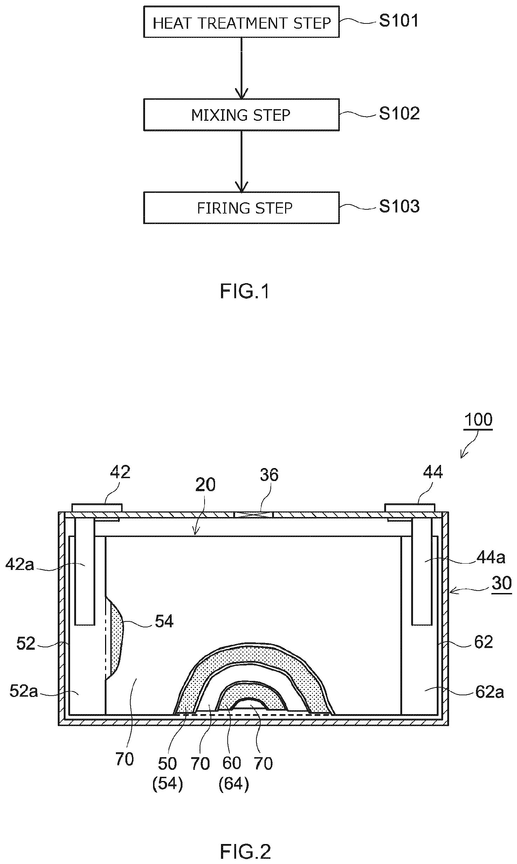

As illustrated in FIG. 1, the method for producing a positive electrode active material according to this embodiment includes the steps of: performing a heat treatment on a hydroxide in which a ratio of a nickel content to a total content of all the metal elements is 60% by mole or more in an air atmosphere to thereby obtain an oxide having primarily a spinel structure (hereinafter also referred to as a "heat treatment step") S101; mixing the oxide with a Li-containing compound to thereby obtain a mixture (hereinafter also referred to as "mixing step") S102; and firing the obtained mixture in an air atmosphere to thereby convert the mixture to a lithium composite oxide with a layered rock salt structure (hereinafter also referred to as "firing step") S103. In the oxide having primarily a spinel structure, a peak integrated intensity ratio of a (003) plane to a (440) plane obtained by a powder X-ray diffraction analysis is 1.5 or less, and a peak integrated intensity ratio of the (440) plane to the (311) plane is 4.5 or more. Next, the steps of the method for producing a positive electrode active material according to this embodiment will be described in detail.

In heat treatment step S101, a hydroxide in which a ratio of a nickel content to a total content of all the metal elements is 60% by mole or more is subjected to a heat treatment in an air atmosphere to thereby obtain an oxide having primarily a spinel structure.

The hydroxide serving as a raw material is a nickel-containing hydroxide, and is typically a hydroxide conventionally used as a precursor in producing a lithium composite oxide (therefore, this hydroxide will also be referred to as a "precursor hydroxide"). Since capacity of the lithium ion secondary battery increases as the nickel content increases, in this hydroxide, a ratio of the nickel content to the total content of all the metal elements is desirably 80% by mole or more.

The precursor hydroxide typically has a composition represented by NiₐMe_{b}(OH)₂ in which Me is a metal element or a semimetal element other than Ni (e.g., Co, Mn, Mg, Ca, Al, Ti, V, Cr, Y, Zr, Nb, Mo, Hf, Ta, W, Na, Fe, Zn, Sn, B, Si, and the like), a + b = 1, a satisfies 0.60 ≤ a ≤ 1.00 (desirably 0.80 ≤ a ≤ 1.00), and b satisfies 0 ≤ b ≤ 0.40 (desirably 0 ≤ b ≤ 0.20). The precursor hydroxide is, for example, nickel cobalt manganese composite hydroxide or nickel cobalt aluminum composite hydroxide, desirably nickel cobalt manganese composite hydroxide. The nickel cobalt manganese composite hydroxide herein may be doped with an element other than Ni, Co, Mn, O, and H (especially a metal element or a metalloid element), and has, for example, the composition represented by the following Formula (I):

NiₓCo_{y}Mn_{z}Mₐ(OH)₂ (I)

In Formula (I), x, y, z, and α respectively satisfy 0.60 ≤ x < 1.00, 0 < y < 0.40, 0 < z < 0.40, 0 ≤ α ≤ 0.10, and x + y + z = 1. M is at least one element selected from the group consisting of Zr, Mo, W, Mg, Ca, Na, Fe, Cr, Zn, Sn, B, and Al. x desirably satisfies 0.80 ≤ x < 1.00, more desirably satisfies 0.80 ≤ x ≤ 0.90. y desirably satisfies 0.05 ≤ y ≤ 0.15. z desirably satisfies 0.05 ≤ z ≤ 0.15. α desirably satisfies 0 ≤ α ≤ 0.05.

The average particle size of the hydroxide is not particularly limited, and is, for example, 0.05 µm to 20 µm, desirably 2 µm to 10 µm. It should be noted that the average particle size of the hydroxide is determined by taking a scanning electron microscope (SEM) photograph of hydroxide particles and obtaining an average value of particle sizes of randomly selected 100 particles.

The precursor hydroxide can be prepared according to a known method (e.g., crystallization method). Specifically, for example, an aqueous solution of a nickel source compound (e.g., nickel sulfate) and another metal source compound (e.g., sulfate of another metal) is prepared, and crystallization reaction is performed according to a known method by using an aqueous solution including an ammonium ion donner (e.g., ammonia water) and an alkaline aqueous solution (e.g., sodium hydroxide aqueous solution) to thereby obtain a precursor hydroxide.

In heat treatment step S101, a heat treatment is performed on the precursor hydroxide in an air atmosphere to thereby obtain an oxide having primarily a spinel structure (hereinafter also referred to as "precursor oxide"). Thus, in heat treatment step S101, the precursor hydroxide is converted to a precursor oxide by the heat treatment in the air atmosphere.

In this embodiment, the crystal structure of the precursor oxide is primarily a spinel structure. In the case of performing a powder X-ray diffraction (XRD) measurement using CuKα rays, a peak of a (440) plane in a Miller indices (hlk) appears in the spinel structure, whereas peaks of a (003) plane and a (311) plane in Miller indices (hlk) appear in a layered rock salt structure. Thus, in regard to the fact that the crystal structure of the precursor oxide is primarily a spinel structure, in this embodiment, for the crystal structure of the precursor oxide, a peak integrated intensity ratio of a (003) plane to a (440) plane [(003) plane/(440) plane] determined by a powder X-ray diffraction (XRD) measurement using CuKα rays is 1.5 or less, and a peak integrated intensity ratio of the (440) plane to a (311) plane [(440) plane/(311) plane] is 4.5 or more.

When the peak integrated intensity ratio [(003) plane/(440) plane] exceeds 1.5, insufficient output characteristics are imparted to a lithium ion secondary battery. The peak integrated intensity ratio [(003) plane/(440) plane] is desirably 1.2 or less, more desirably 1.0 or less.

When the peak integrated intensity ratio [(440) plane/(311) plane] is less than 4.5, insufficient output characteristics are imparted to a lithium ion secondary battery. From the viewpoint of the effect of further enhancing output, the peak integrated intensity ratio [(003) plane/(440) plane] is desirably 5.0 or more, more desirably 10 or more, more desirably 50 or more, even more desirably 100 or more, especially desirably 200 or more.

In the precursor oxide, a crystallite size of the (440) plane obtained by a powder X-ray diffraction (XRD) measurement using CuKα rays is not particularly limited, and is desirably 40Å or more.

It should be noted that the powder X-ray diffraction (XRD) measurement can be performed according to a known method. Specifically, the powder X-ray diffraction (XRD) measurement can be performed by using CuKα rays with a known powder X-ray diffraction apparatus. The peak integrated intensity ratio can be calculated according to a known method. Specifically, the peak integrated intensity ratio can be calculated with, for example, software included or installed in apparatus.

Heat treatment conditions in heat treatment step S101 are selected such that the precursor oxide satisfies these peak integrated intensity ratios obtained by powder XRD measurement.

In regard to an index of the heat treatment conditions, as the heat treatment temperature decreases, the peak integrated intensity ratio [(003) plane/(440) plane] tends to increase, and the peak integrated intensity ratio [(440) plane/(311) plane] tends to increase. As the heat treatment time increases, the peak integrated intensity ratio [(440) plane/(311) plane] tends to increase. The heat treatment temperature is desirably 400°C to 580°C, more desirably 480°C to 550°C. The heat treatment time is desirably 0.1 hour to 120 hours, more desirably 0.5 hours to 48 hours.

The heat treatment can be performed according to a known method. The heat treatment can be performed with a continuous or batch-type electric heating furnace, for example. With the heat treatment, a precursor oxide having primarily a spinel structure can be obtained. In this embodiment, since heat treatment step S101 is performed in the air atmosphere, an oxygen atmosphere does not need to be used.

It should be noted that the obtained precursor oxide having primarily a spinel structure has a tap density higher than that of the precursor hydroxide. This is because of the influence of elimination of water from the precursor hydroxide. Accordingly, a larger amount of the precursor oxide can be supplied to firing step S103, and the production method according to this embodiment is advantageous in terms of high yield.

Next, mixing step S102 will be described. In mixing step S102, the obtained precursor oxide is mixed with a Li-containing compound. Mixing step S102 is generally performed in an air atmosphere, in a manner similar to a conventional method. Thus, no oxygen atmosphere needs to be used. Mixing step S102 may be performed in a nitrogen atmosphere or an argon atmosphere.

The Li-containing compound can be a compound serving as a known lithium source used in producing a positive electrode active material. Specific examples of the Li-containing compound include lithium carbonate, lithium hydroxide, lithium nitrate, lithium acetate, lithium oxalate, and lithium chloride. These materials may be used alone or two or more of them may be used in combination. The Li-containing compound is desirably lithium hydroxide.

A mixing ratio between the precursor oxide and the Li-containing compound may be determined in accordance with a desired composition of the positive electrode active material. That is, the mixing ratio between the precursor oxide and the Li-containing compound may be selected such that a molar ratio between the metal element included in the precursor oxide and the Li element included in the Li-containing compound is equal to a molar ratio between a metal element other than Li and a Li element in a desired composition of the positive electrode active material.

This mixing can be performed according to a known method. For example, this mixing can be performed with a known stirrer/mixer such as a shaker mixer, a loedige mixer, a julia mixer, a V-type mixer, or a ball mill. A mixture can be prepared by this mixing.

Then, firing step S103 will be described. In firing step S103, the mixture is fired in an air atmosphere to be thereby converted to a lithium composite oxide with a layered rock salt structure.

Here, in producing a positive electrode active material, in a case where the precursor is a hydroxide with a layered rock salt structure and a lithium source is a lithium hydroxide, a reaction formula in the firing step is expressed by the following Formula (1) (where M¹ is, for example, a metal element containing Ni).

M¹(OH)₂+LiOH+1/4O₂ → LiM¹O₂+3/2H₂O (1)

On the other hand, in a case where the precursor is an oxide with a layered rock salt structure, a reaction formula in the firing step is expressed by the following Formula (2) (where M¹ is defined in the same manner as described above).

M¹O+LiOH+1/4O₂ → LiM¹O₂+1/2H₂O (2)

On the other hand, in a case where the precursor is an oxide with a spinel-type crystal structure, a reaction formula in the firing step is expressed by the following Formula (3) (where M¹ is defined in the same manner as described above).

1/3M¹₃O₄+LiOH+1/12O₂ → LiM¹O₂+1/2H₂O (3)

As shown in Formulas (1) to (3), the precursor oxide with a spinel-type crystal structure has a large oxygen content, and therefore, a small oxygen amount is needed for reaction (as understood by those skilled in the art, the same holds for a case where the lithium source is a compound other than lithium hydroxide). In a comparison between Formula (1) and Formula (3), the oxygen amount necessary for the case of using the precursor oxide with a spinel-type crystal structure is 1/3. Thus, in this embodiment, synthesis reaction of a positive electrode active material can be performed in a concentration of oxygen contained in an air atmosphere. Accordingly, in this embodiment, an oxygen atmosphere (i.e., atmosphere in which an oxygen concentration is higher than that in the air) does not need to be used. In addition, since a large part of Ni is present in a trivalent form in the precursor oxide, ion mixing can be suppressed. Accordingly, the obtained positive electrode active material can impart high output to a lithium ion secondary battery.

The firing temperature and firing time are not particularly limited as long as a lithium composite oxide with a layered rock salt structure is obtained. The firing temperature is, for example, 700°C to 1000°C, desirably 750°C to 900°C, more desirably 790°C to 900°C. The firing time is, for example, 3 to 72 hours, desirably 4 hours to 24 hours, more desirably 5 hours to 12 hours. Firing is desirably performed in such a condition that a crystallite size of a (003) plane obtained by a powder X-ray diffraction analysis using CuKα rays is 600Å to 1000Å in the obtained lithium composite oxide. It should be noted that when the firing temperature is high, the crystallite size of the (003) plane tends to be large. When the firing time is long, the crystallite size of the (003) plane tends to be large.

Firing of the mixture can be performed according to a known method. The firing can be performed with a continuous or batch-type electric heating furnace, for example. Through the firing, a lithium composite oxide with a layered rock salt structure can be obtained as a positive electrode active material.

The obtained positive electrode active material (i.e., lithium composite oxide with a layered rock salt structure) typically has a composition represented by Li_{1+c}NiₐMe_{b}O₂ in which Me is a metal element or a metalloid element other than Ni (e.g., Co, Mn, Mg, Ca, Al, Ti, V, Cr, Y, Zr, Nb, Mo, Hf, Ta, W, Na, Fe, Zn, Sn, B, or Si), a + b = 1, c satisfies -0.05 ≤ c ≤ 0.30, a satisfies 0.60 ≤ a≤ 1.00 (desirably 0.80 ≤ a ≤ 1.00), and b satisfies 0 ≤ b ≤ 0.40 (desirably 0 ≤ b ≤ 0.20).

The positive electrode active material is, for example, lithium nickel cobalt manganese composite oxide or lithium nickel cobalt aluminum composite oxide, desirably lithium nickel cobalt manganese composite oxide. The lithium nickel cobalt manganese composite oxide herein may be doped with an element other than Li, Ni, Co, Mn, and O (especially a metal element or a metalloid element), and has, for example, the composition represented by the following Formula (II):

Li₁₊ₜNiₓCo_{y}Mn_{z}M_{α}O₂ (II)

In Formula (II), t, x, y, z, and α respectively satisfy -0.05 ≤ t ≤ 0.30, 0.60 ≤ x < 1.00, 0 < y < 0.40, 0 < z < 0.40, 0 ≤ α ≤ 0.10, and x + y + z = 1. M is at least one element selected from the group consisting of Zr, Mo, W, Mg, Ca, Na, Fe, Cr, Zn, Sn, B, and Al. t desirably satisfies 0 ≤ t ≤ 0.30. x desirably satisfies 0.80 ≤ x < 1.00, more desirably satisfies 0.80 ≤ x ≤ 0.90. y desirably satisfies 0.05 ≤ y ≤ 0.15. z desirably satisfies 0.05 ≤ z ≤ 0.15. α desirably satisfies 0 ≤ α ≤ 0.05.

From the viewpoint of the effect of further enhancing output, in the positive electrode active material, the crystallite size of the (003) plane obtained by a powder X-ray diffraction analysis using CuKα rays is desirably 600Å to 1000Å, more desirably 600Å to 800Å. It should be noted that the crystallite size of the (003) plane can be obtained according to a known method. Specifically, the crystallite size can be obtained by performing a powder X-ray diffraction analysis according to the method described above and using a full width at half maximum (FWHM) of the (003) plane, a value of 2θ and a Scherrer equation.

The average particle size of the positive electrode active material is not particularly limited, and is, for example, 0.05 µm to 20 µm, desirably 2 µm to 10 µm. It should be noted that the average particle size of the positive electrode active material can be determined by taking a scanning electron microscope (SEM) photograph of positive electrode active material particles and obtaining an average value of particle sizes of randomly selected 100 particles.

The positive electrode active material obtained by the production method according to this embodiment has a high nickel content. Thus, in the case of fabricating a lithium ion secondary battery using this positive electrode active material, the lithium ion secondary battery has a large capacity. The lithium ion secondary battery using the positive electrode active material described above also has excellent output characteristics. Thus, the positive electrode active material according to this embodiment is desirably a positive electrode active material of a lithium ion secondary battery.

A specific configuration example of the lithium ion secondary battery using the positive electrode active material obtained by the production method according to this embodiment described above will be described with reference to the drawings.

A lithium ion secondary battery 100 illustrated in FIG. 2 is a sealed battery configured by housing a flat wound electrode body 20 and a nonaqueous electrolyte (not shown) in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminium.

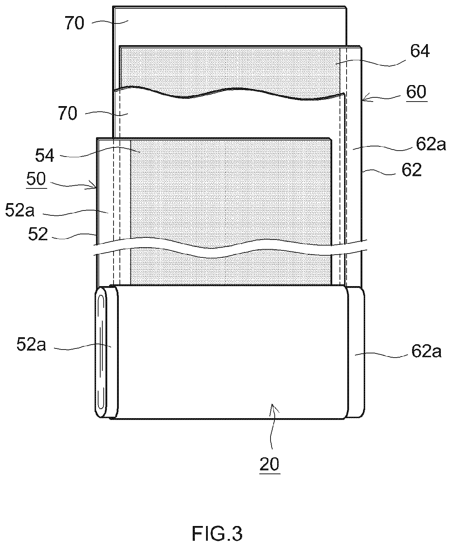

As illustrated in FIGS. 2 and 3, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). A positive electrode current collector plate 42a and a negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminium foil as the positive electrode current collector 52, the thickness thereof is not particularly limited, and is, for example, 5 µm or more and 35 µm or less, and desirably 7 µm or more and 20 µm or less.

The positive electrode active material layer 54 contains a positive electrode active material. As this positive electrode active material, at least the positive electrode active material obtained by the production method according to this embodiment described above is used. The content of the positive electrode active material is not particularly limited, and is desirably 70% by mass or more, more desirably 80% by mass or more, even more desirably 85% by mass or more, in the positive electrode active material layer 54 (i.e., with respect to the total mass of the positive electrode active material).

The positive electrode active material layer 54 can include a component other than the positive electrode active material. Examples of this component include lithium phosphate (Li₃PO₄), a conductive agent, and a binder.

The content of lithium phosphate in the positive electrode active material layer 54 is not particularly limited, and is desirably 1% by mass or more15% by mass or less, more desirably 2% by mass or more12% by mass or less.

As the conductive agent, carbon black such as acetylene black (AB) or other carbon materials (e.g., graphite) can be desirably used, for example. The content of the conductive agent in the positive electrode active material layer 54 is not particularly limited, and is, for example, 0.1% by mass or more and 20% by mass or less, desirably 1% by mass or more and 15% by mass or less, more desirably 2% by mass or more and 10% by mass or less.

Examples of the binder include polyvinylidene fluoride (PVdF). The content of the binder in the positive electrode active material layer 54 is not particularly limited, and is, for example, 0.5% by mass or more and 15% by mass or less, desirably 1% by mass or more and 10% by mass or less, more desirably 1.5% by mass or more and 8% by mass or less.

The thickness of the positive electrode active material layer 54 is not particularly limited, and is, for example, 10 µm or more and 300 µm or less, desirably 20 µm or more and 200 µm or less.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness thereof is not particularly limited, and is, for example, 5 µm or more and 35 µm or less, desirably 7 µm or more and 20 µm or less.

The negative electrode active material layer 64 contains a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

The average particle size (median particle size: D50) of the negative electrode active material is not specifically limited, and is, for example, 0.1 µm or more and 50 µm or less, desirably 1 µm or more and 25 µm or less, more desirably 5 µm or more and 20 µm or less.

The content of the negative electrode active material in the negative electrode active material layer 64 is not particularly limited, and is desirably 90% by mass or more, more desirably 95% by mass or more.

The negative electrode active material layer 64 can include components other than the negative electrode active material, such as a binder or a thickener.

Examples of the binder include styrene-butadiene rubber (SBR) and a modified product thereof, acrylonitrile butadiene rubber and a modified product thereof, acrylic rubber and a modified product thereof, and fluorine rubber. Among these rubbers, SBR is desirable. The content of the binder in the negative electrode active material layer 64 is not specifically limited, and is desirably 0.1 mass% or more and 8 mass% or less, and more desirably 0.2 mass% or more and 3 mass% or less.

Examples of the thickener include: cellulose-based polymers such as carboxymethyl cellulose (CMC), methyl cellulose (MC), cellulose acetate phthalate (CAP), and hydroxypropyl methyl cellulose (HPMC); and polyvinyl alcohol (PVA). Among these materials, CMC is desirable. The content of the thickener in the negative electrode active material layer 64 is not particularly limited, and is desirably 0.3% by mass or more and 3% by mass or less, more desirably 0.4% by mass or more and 2% by mass or less.

The thickness of the negative electrode active material layer 64 is not particularly limited, and is, for example, 10 µm or more and 300 µm or less, desirably 20 µm or more and 200 µm or less.

Examples of the separators 70 include porous sheets (film) of resins such as polyethylene (PE), polypropylene (PP), polyester, cellulose, and polyamide. The porous sheet may have a single-layer structure or a laminated structure of two or more layers (e.g., three-layer structure in which a PP layer is stacked on each surface of a PE layer). A heat-resistance layer (HRL) may be provided on a surface of the separator 70.

The thickness of the separator 70 is not particularly limited, and is, for example, 5 µm or more and 50 µm or less, desirably 10 µm or more and 30 µm or less.

The nonaqueous electrolyte typically includes a nonaqueous solvent and an electrolyte salt (i.e., supporting electrolyte). As the nonaqueous solvent, various organic solvents such as carbonates, ethers, esters, nitriles, sulfones, and lactones for use in an electrolyte of a typical lithium ion secondary battery can be used without any particular limitation. Among these, carbonates are desirable, and specific examples of carbonates include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such nonaqueous solvents may be used alone or two or more of them may be used in combination.

As the electrolyte salt, a lithium salt such as LiPF₆, LiBF₄, or lithium bis(fluorosulfonyl)imide (LiFSI) can be used, and among these, LiPF₆ is desirable. The concentration of the electrolyte salt is not particularly limited, and is desirably 0.7 mol/L or more and 1.3 mol/L or less.

The nonaqueous electrolyte may include components not described above, for example, various additives exemplified by: a film forming agent such as an oxalato complex; a gas generating agent such as biphenyl (BP) or cyclohexylbenzene (CHB); and a thickener to the extent that the effects of the present disclosure are not significantly impaired.

The lithium ion secondary battery 100 has a large capacity and excellent output characteristics. The lithium ion secondary battery 100 is applicable to various applications. Examples of desired applications include drive power supplies to be mounted on vehicles such as battery electric vehicles (BEVs), hybrid electric vehicles (REVs), and plug-in hybrid electric vehicles (PHEVs). The lithium ion secondary battery 100 can be used as a storage battery for, for example, a small-size power storage device. The lithium ion secondary battery 100 can be used in a form of a battery module in which a plurality of batteries are typically connected in series and/or in parallel.

The foregoing description has been directed to the square lithium ion secondary battery including the flat wound electrode body as an example. However, the positive electrode active material obtained by the production method according to this embodiment is also applicable to lithium ion secondary batteries of other types according to a known method. For example, by using the positive electrode active material obtained by the production method according to this embodiment, a lithium ion secondary battery including a stacked-type electrode body (i.e., an electrode body in which a plurality of positive electrodes and a plurality of negative electrodes are alternately stacked) can be constructed. By using the positive electrode active material obtained by the production method according to this embodiment, batteries such as a cylindrical lithium ion secondary battery, a coin-type lithium ion secondary battery, and a laminate case-type lithium ion secondary battery can also be constructed. In addition, by using the positive electrode active material obtained by the production method according to this embodiment, an all-solid-state secondary battery using a solid electrolyte as an electrolyte can also be constructed.

Examples of the present disclosure will now be described, but are not intended to limit the present disclosure to these examples.

### [Example 1]

According to a conventional method, nickel sulfate, cobalt sulfate, and manganese sulfate were used by a crystallization method to obtain a composite hydroxide containing nickel, cobalt, and manganese at a molar ratio of 8:1:1 (i.e., Ni_{0.8}Co_{0.1}Mn_{0.1}(OH)₂), as a precursor hydroxide that is a raw material. This precursor hydroxide was subjected to a heat treatment at 550°C for 0.5 hours in an air atmosphere. In this manner, a precursor oxide was obtained. A crystal structure of the precursor oxide was analyzed by a method described later.

The obtained precursor oxide was mixed with lithium hydroxide. The mixing was performed such that metal elements in the precursor oxide and a lithium element in the lithium hydroxide were present at a mole ratio of 1:1. The obtained mixture was fired at 850°C for 10 hours in an air atmosphere in an electric heating furnace to thereby obtain a lithium composite oxide as a positive electrode active material.

### [Examples 2 to 18]

Using a composite hydroxide with a composition shown in Table 1, a heat treatment was performed in an air atmosphere under conditions of a heat treatment temperature and a heat treatment time shown in Table 1 to thereby obtain a precursor oxide. A crystal structure of the precursor oxide was analyzed by a method described later. The precursor oxide was mixed with lithium hydroxide. The mixing was performed such that metal elements in the precursor oxide and a lithium element in the lithium hydroxide were present at a mole ratio of 1:1. The obtained mixture was fired in an air atmosphere under conditions of a firing temperature and a firing time shown in Table 2 in an electric heating furnace to thereby obtain a lithium composite oxide that is a positive electrode active material.

### [Comparative Example 1]

As a raw material, a precursor hydroxide having a composition represented by Ni_{0.8}Co_{0.1}Mn_{0.1}(OH)₂ was prepared. The precursor hydroxide was mixed with lithium hydroxide. The mixing was performed such that metal elements in the precursor hydroxide and a lithium element in the lithium hydroxide were present at a mole ratio of 1:1. The obtained mixture was fired in an air atmosphere at 850°C for 10 hours in an electric heating furnace to thereby obtain a lithium composite oxide.

### [Comparative Example 2]

As a raw material, a precursor hydroxide having a composition represented by Ni_{0.8}Co_{0.1}Mn_{0.1}(OH)₂ was prepared. The precursor hydroxide was mixed with lithium hydroxide. The mixing was performed such that metal elements in the precursor hydroxide and a lithium element in the lithium hydroxide were present at a mole ratio of 1:1. The obtained mixture was fired in an oxygen atmosphere at 860°C for 10 hours in an electric heating furnace to thereby obtain a lithium composite oxide.

### [Comparative Examples 3 to 5]

Using Ni_{0.8}Co_{0.1}Mn_{0.1}(OH)₂, a heat treatment was performed in an air atmosphere under conditions of a heat treatment temperature and a heat treatment time shown in Table 1 to thereby obtain a precursor oxide. A crystal structure of the precursor oxide was analyzed by a method described later. The precursor oxide was mixed with lithium hydroxide. The mixing was performed such that metal elements in the precursor oxide and a lithium element in the lithium hydroxide were present at a mole ratio of 1:1. The obtained mixture was fired in an atmosphere shown in Table 2 under conditions of a firing temperature and a firing time shown in Table 2 in an electric heating furnace to thereby obtain a lithium composite oxide that is a positive electrode active material.

### [Comparative Example 6]

As a raw material, a precursor hydroxide having a composition represented by Ni_{0.6}Co_{0.2}Mn_{0.2}(OH)₂ was prepared. The precursor hydroxide was mixed with lithium hydroxide. The mixing was performed such that metal elements in the precursor oxide and a lithium element in the lithium hydroxide were present at a mole ratio of 1:1. The obtained mixture was fired in an air atmosphere at 890°C for 10 hours in an electric heating furnace to thereby obtain a lithium composite oxide.

### [Comparative Example 7]

As a raw material, a precursor hydroxide having a composition represented by Ni_{0.6}Co_{0.2}Mn_{0.2}(OH)₂ was prepared. The precursor hydroxide was mixed with lithium hydroxide. The mixing was performed such that metal elements in the precursor oxide and a lithium element in the lithium hydroxide were present at a mole ratio of 1:1. The obtained mixture was fired in an oxygen atmosphere at 900°C for 10 hours in an electric heating furnace to thereby obtain a lithium composite oxide.

### [Comparative Example 8]

As a raw material, a precursor hydroxide having a composition represented by Ni_{0.8}Co_{0.1}Mn_{0.1}(OH)₂ was prepared. The precursor hydroxide was mixed with lithium hydroxide. The mixing was performed such that metal elements in the precursor oxide and a lithium element in the lithium hydroxide were present at a mole ratio of 1:1. The obtained mixture was temporarily fired in an oxygen atmosphere at 500°C for 5 hours in an electric heating furnace, and then, the oxygen atmosphere was replaced by an air atmosphere, and the resulting mixture was fired at 850°C for 10 hours to thereby obtain a lithium composite oxide.

### [Comparative Example 9]

In preparing a precursor by a crystallization method using nickel sulfate, cobalt sulfate, and manganese sulfate, sodium persulfate and sodium peroxide were added to thereby obtain Ni_{0.6}Co_{0.2}Mn_{0.2}O(OH) as a precursor oxyhydroxide that is a raw material. The precursor oxyhydroxide was mixed with lithium hydroxide. The mixing was performed such that metal elements in the precursor oxyhydroxide and a lithium element in the lithium hydroxide were present at a mole ratio of 1:1. The obtained mixture was fired in an air atmosphere at 890°C for 10 hours in an electric heating furnace to thereby obtain a lithium composite oxide.

### [Powder X-ray Diffraction Analysis of Precursor Oxide]

The precursor oxide obtained by the heat treatment described above was subjected to a powder XRD measurement with XRD apparatus "smart Lab" (manufactured by Rigaku Cooperation). With analysis software "PDXL2" (manufactured by Rigaku Cooperation), a peak integrated intensity ratio of a (003) plane to a (440) plane in Miller indices hlk [(003) plane/(440) plane], and a peak integrated intensity ratio of the (440) plane to a (311) plane [(440) plane/(311) plane] were obtained. Table 1 shows the results.

### [Powder X-ray Diffraction Analysis of Positive Electrode Active Material]

The positive electrode active material obtained as described above was subjected to a powder XRD measurement with XRD apparatus "smart Lab" (manufactured by Rigaku Cooperation). With analysis software "PDXL2" (manufactured by Rigaku Cooperation), a crystallite size of the (003) plane was obtained using a full width at half maximum of the (003) plane, a value of 2θ and a Scherrer equation. Table 2 shows results.

### [Tap Density Measurement of Precursor Oxide and Precursor Hydroxide]

Tap densities of the precursor hydroxide (Ni_{0.8}Co_{0.1}Mn_{0.1}(OH)₂) used in Examples 1 to 6 and 9 to 18 and Comparative Examples 1 to 5 and 8 and the precursor oxide produced in Examples 1 to 6 and 9 to 18 were measured with a commercially available tapping machine "KRS-409 type" (manufactured by Kuramochi Kagaku Kikai Seisakusyo Co.) according to a method defined by JIS K1469:2003. Consequently, it was found that the precursor oxides had tap densities larger than that of the precursor hydroxide. Similarly, tap densities of the precursor hydroxide (Ni_{0.6}Co_{0.2}Mn_{0.2}(OH)₂) used in Example 7 and Comparative Examples 6 and 7 and the precursor oxide produced in Example 7 were measured, and the precursor oxides had tap densities larger than that of the precursor hydroxide.

### <Fabrication of Evaluation Lithium Ion Secondary Battery>

The obtained positive electrode active materials of each of the examples and the comparative examples, acetylene black (AB) as a conductive material, and polyvinylidene fluoride (PVDF) as a binder were mixed at a mass ratio of positive electrode active material:AB:PVDF = 85:10:5 in N-methylpyrrolidone (NMP), thereby preparing a paste for forming a positive electrode active material layer. This paste was applied onto aluminium foil with a thickness of 15 µm and dried, thereby producing a positive electrode sheet.

Natural graphite (C) as a negative electrode active material, styrene-butadiene rubber (SBR) as a binder, and carboxymethyl cellulose (CMC) as a thickener were mixed at a mass ratio of C:SBR:CMC = 98:1:1 in ion-exchanged water, thereby preparing a paste for forming a negative electrode active material layer. This paste was applied onto copper foil with a thickness of 10 µm and dried, thereby producing a negative electrode sheet.

As separator sheets, porous polyolefin sheets each having a thickness of 20 µm and a three-layer structure of PP/PE/PP were prepared.

The positive electrode sheet, the negative electrode sheet, and the separator sheets were stacked, and an electrode terminal was attached to the stack of the positive electrode sheet, the negative electrode sheet, and the separator sheet, and the resultant was housed in a laminated case. Subsequently, a nonaqueous electrolyte was poured in the laminated case, and the laminated case was hermetically sealed. As the nonaqueous electrolyte, an electrolyte in which LiPF₆ as a supporting electrolyte was dissolved at a concentration of 1.0 mol/L in a mixed solvent which includes ethylene carbonate (EC), dimethyl carbonate (DMC), and ethyl methyl carbonate (EMC) at a volume ratio of 3:4:3 was used. In this manner, an evaluation lithium ion secondary battery was obtained.

### <Output Characteristic Evaluation>

Each evaluation lithium ion secondary battery was subjected to an activation treatment, then adjusted to have an SOC of 60%, and placed in an environment of -10°C. The evaluation lithium ion secondary battery was discharged at a current value of 15C for two seconds. Based on the voltage and the current value at this time, an output (W) was calculated. Supposing an output of the evaluation lithium ion secondary battery using the positive electrode active material obtained in Comparative Example 1 was 100, ratios of outputs of the evaluation lithium ion secondary batteries using the positive electrode active materials obtained in the other comparative examples and examples were obtained. Table 2 shows results.

[Table 1]

**Table 1**

| | Raw material | Heat treatment | cond itions | Peak integrated intensity ratio of oxide | |
|---|---|---|---|---|---|
| | | Temperature (°C) | Time (h) | (003)/(440) | (440)/(311) |
| Example 1 | Ni_{0.8}Co_{0.1}Mn_{0.1}(OH)₂ | 550 | 0.5 | 1 | 8 |
| Example 2 | Ni_{0.8}Co_{0.1}Mn_{0.1}(OH)₂ | 540 | 1 | 0.5 | 8 |
| Example 3 | Ni_{0.8}Co_{0.1}Mn_{0.1}(OH)₂ | 520 | 2 | 0.1 | 8 |
| Example 4 | Ni_{0.8}Co_{0.1}Mn_{0.1}(OH)₂ | 500 | 5 | 0.05 | 8 |
| Example 5 | Ni_{0.8}Co_{0.1}Mn_{0.1}(OH)₂ | 490 | 8 | 0.01 | 8 |
| Example 6 | Ni_{0.8}Co_{0.01}Mn_{0.01}(OH)₂ | 550 | 1 | 0.05 | 5 |
| Example 7 | Ni_{0.6}Co_{0.2}Mn_{0.2}(OH)₂ | 500 | 5 | 0.05 | 8 |
| Example 8 | Ni(OH)₂ | 500 | 5 | 0.05 | 8 |
| Example 9 | Ni_{0.8}Co_{0.1}Mn_{0.1}(OH)₂ | 480 | 5 | 0.05 | 10 |
| Example 10 | Ni_{0.8}Co_{0.1}Mn_{0.1}(OH)₂ | 480 | 10 | 0.05 | 50 |
| Example 11 | Ni_{0.8}Co_{0.1}Mn_{0.1}(OH)₂ | 480 | 15 | 0.05 | 200 |
| Example 12 | Ni_{0.8}Co_{0.1}Mn_{0.1}(OH)₂ | 480 | 20 | 0.05 | 250 |
| Example 13 | Ni_{0.8}Co_{0.1}Mn_{0.1}(OH)₂ | 480 | 24 | 0.05 | 1000 |
| Example 14 | Ni_{0.8}Co_{0.1}Mn_{0.1}(OH)₂ | 480 | 48 | 0.05 | 10000 |
| Example 15 | Ni_{0.8}Co_{0.1}Mn_{0.1}(OH)₂ | 480 | 15 | 0.05 | 200 |
| Example 16 | Ni_{0.8}Co_{0.1}Mn_{0.1}(OH)₂ | 480 | 15 | 0.05 | 200 |
| Example 17 | Ni_{0.8}Co_{0.1}Mn_{0.1}(OH)₂ | 480 | 15 | 0.05 | 200 |
| Example 18 | Ni_{0.8}Co_{0.1}Mn_{0.1}(OH)₂ | 480 | 15 | 0.05 | 200 |
| Comparative Example 1 | Ni_{0.8}Co_{0.1}Mn_{0.1}(OH)₂ | no heat treatment | | - | - |
| Comparative Example 2 | Ni_{0.8}Co_{0.1}Mn_{0.1}(OH)₂ | no heat treatment | | - | - |
| Comparative Example 3 | Ni_{0.8}Co_{0.1}Mn_{0.1}(OH)₂ | 500 | 5 | 0.05 | 8 |
| Comparative Example 4 | Ni_{0.8}Co_{0.1}Mn_{0.1}(OH)₂ | 600 | 5 | 0.05 | 4 |
| Comparative Example 5 | Ni_{0.8}Co_{0.1}Mn_{0.1}(OH)₂ | 100 | 5 | 2 | 20 |
| Comparative Example 6 | Ni_{0.6}Co_{0.2}Mn_{0.2}(OH)₂ | no heat treatment | | - | - |
| Comparative Example 7 | Ni_{0.6}Co_{0.2}Mn_{0.2}(OH)₂ | no heat treatment | | - | - |
| Comparative Example 8 | Ni_{0.8}Co_{0.01}Mn_{0.1}(OH)₂ | no heat treatment | | - | - |
| Comparative Example 9 | Ni_{0.6}Co_{0.2}Mn_{0.2}O(OH) | no heat treatment | | - | - |

[Table 2]

**Table 2**

| | Firing conditions | | | Active material crystallite size (Å) | Secondary battery output ratio |
|---|---|---|---|---|---|
| | Atmosphere | Temperature (°C) | Time (h) | | |
| Example 1 | air | 850 | 10 | 1200 | 120 |
| Example 2 | air | 850 | 10 | 1200 | 120 |
| Example 3 | air | 850 | 10 | 1200 | 120 |
| Example 4 | air | 850 | 10 | 1200 | 120 |
| Example 5 | air | 850 | 10 | 1200 | 120 |
| Example 6 | air | 850 | 10 | 1200 | 120 |
| Example 7 | air | 890 | 10 | 1200 | 120 |
| Example 8 | air | 810 | 10 | 1200 | 120 |
| Example 9 | air | 850 | 10 | 1200 | 125 |
| Example 10 | air | 850 | 10 | 1200 | 127 |
| Example 11 | air | 850 | 10 | 1200 | 130 |
| Example 12 | air | 850 | 10 | 1200 | 130 |
| Example 13 | air | 850 | 10 | 1200 | 130 |
| Example 14 | air | 850 | 10 | 1200 | 130 |
| Example 15 | air | 830 | 10 | 1000 | 135 |
| Example 16 | air | 810 | 10 | 800 | 140 |
| Example 17 | air | 790 | 10 | 600 | 140 |
| Example 18 | air | 770 | 10 | 500 | 125 |
| Comparative Example 1 | air | 850 | 10 | 1200 | 100 |
| Comparative Example 2 | O₂ | 860 | 10 | 1200 | 120 |
| Comparative Example 3 | O₂ | 870 | 10 | 1200 | 120 |
| Comparative Example 4 | air | 860 | 10 | 1200 | 100 |
| Comparative Example 5 | air | 850 | 10 | 1200 | 100 |
| Comparative Example 6 | air | 890 | 10 | 1200 | 100 |
| Comparative Example 7 | O₂ | 900 | 10 | 1200 | 120 |
| Comparative Example 8 | O₂→air | 850 | 10 | 1200 | 105 |
| Comparative Example 9 | air | 890 | 10 | 1200 | 102 |

It can be understood from the results of Tables 1 and 2 that when an hydroxide having a nickel content of 60% by mole or more is subjected to a heat treatment in an air atmosphere to be converted to an oxide having primarily a spinel structure having a peak integrated intensity ratio [(003) plane/(440) plane] of 1.5 or less and a peak integrated intensity ratio [(440) plane/(311) plane] of 4.5 or more, a positive electrode active material capable of imparting high output to a lithium ion secondary battery can be produced without using an oxygen atmosphere. Thus, it can be understood that the method for producing a positive electrode active material disclosed herein enables production of a positive electrode active material having a high nickel content and capable of imparting high output to a lithium ion secondary battery without using an oxygen atmosphere.

Specific examples of the present disclosure have been described in detail hereinbefore, but are merely illustrative examples, and are not intended to limit the scope of claims. The techniques described in claims include various modifications and changes of the above exemplified specific examples.

That is, a method for producing a positive electrode active material disclosed here are the following items [1] to [5].
[1] A method for producing a positive electrode active material including: performing a heat treatment on a hydroxide in which a ratio of a nickel content to a total content of all the metal elements is 60% by mole or more, in an air atmosphere to thereby obtain an oxide having primarily a spinel structure; mixing the oxide with a Li-containing compound to thereby obtain a mixture; and firing the mixture in an air atmosphere to thereby convert the mixture to a lithium composite oxide with a layered rock salt structure, in which in the oxide having primarily a spinel structure, a peak integrated intensity ratio of a (003) plane to a (440) plane is 1.5 or less, and a peak integrated intensity ratio of the (440) plane to a (311) plane is 4.5 or more, the peak integrated intensity ratios being obtained by a powder X-ray diffraction analysis using CuKα rays.
[2] The method of item [1], in which in the hydroxide, the ratio of the nickel content to the total content of all the metal elements is 80% by mole or more.
[3] The method of item [1] or [2], in which the hydroxide is a nickel cobalt manganese composite hydroxide, and the lithium composite oxide with the layered rock salt structure is a lithium nickel cobalt manganese composite oxide.
[4] The method of any one of items [1] to [3], in which the peak integrated intensity ratio of the (440) plane to the (311) plane is 10 or more.
[5] The method of any one of items [1] to [4], in which in the lithium composite oxide with the layered rock salt structure, a crystallite size of the (003) plane obtained by a powder X-ray diffraction analysis using CuKα rays is 600Å to 1000Å.

## Claims

1. A method for producing a positive electrode active material, the method comprising:
a step (S101) of performing a heat treatment on a hydroxide in which a ratio of a nickel content to a total content of all the metal elements is 60% by mole or more, in an air atmosphere to thereby obtain an oxide having primarily a spinel structure;
a step (S102) of mixing the oxide with a Li-containing compound to thereby obtain a mixture; and
a step (S103) of firing the mixture in an air atmosphere to thereby convert the mixture to a lithium composite oxide with a layered rock salt structure, wherein
in the oxide having primarily a spinel structure, a peak integrated intensity ratio of a (003) plane to a (440) plane is 1.5 or less, and a peak integrated intensity ratio of the (440) plane to a (311) plane is 4.5 or more, the peak integrated intensity ratios being obtained by a powder X-ray diffraction analysis using CuKα rays.

2. The method according to claim 1, wherein in the hydroxide, the ratio of the nickel content to the total content of all the metal elements is 80% by mole or more.

3. The method according to claim 1, wherein the hydroxide is a nickel cobalt manganese composite hydroxide, and the lithium composite oxide with the layered rock salt structure is a lithium nickel cobalt manganese composite oxide.

4. The method according to claim 1, wherein the peak integrated intensity ratio of the (440) plane to the (311) plane is 10 or more.

5. The method according to claim 1, wherein in the lithium composite oxide with the layered rock salt structure, a crystallite size of the (003) plane obtained by a powder X-ray diffraction analysis using CuKα rays is 600Å to 1000Å.
